# EUROPEAN PATENT SPECIFICATION

(11) **EP 2 571 951 B1**
(45) Date of publication and mention of the grant of the patent: **13.07.2016**
(21) Application number: 11783951.4
(22) Date of filing: 06.05.2011
(51) Int. Cl.: C09J 175/04, C09J 11/06, C08K 5/3437, C08L 75/04, B32B 37/12, C08G 18/38, C08G 18/16, C08G 18/80, C08G 18/78, C08G 18/42, B32B 27/08

(54) **CONTROLLED CURE ALIPHATIC LAMINATING ADHESIVE USING NON-MIGRATING BLOCKING AGENTS FOR ORGANOMETALLIC CATALYSTS**
ALIPHATISCHER BESCHICHTUNGSHAFTSTOFF MIT GESTEUERTER HÄRTUNG UNTER VERWENDUNG NICHT-MIGRIERENDER BLOCKIERUNGSMITTEL FÜR ORGANOMETALLISCHE KATALYSATOREN
ADHÉSIF STRATIFIÉ ALIPHATIQUE À DURCISSEMENT CONTRÔLÉ UTILISANT DES AGENTS DE BLOCAGE NE MIGRANT PAS POUR CATALYSEURS ORGANOMÉTALLIQUES

(30) Priority: 17.05.2010 US 34529610 P
(43) Date of publication of application: 27.03.2013
(73) Proprietor: Henkel IP & Holding GmbH, 40589 Düsseldorf (DE)
(72) Inventor: KOLLBACH, Guido, Apex North Carolina 27502 (US); RAMALINGAM, Balasubramaniam, Cary North Carolina 27511 (US)
(74) Representative: Henkel IP Department
(86) International application number: PCT/US2011/035454
(87) International publication number: WO 2011/146252

(56) References cited:
- US-A- 4 322 327
- US-A- 5 474 827
- US-A1- 2007 270 567
- US-A1- 2009 247 720
- US-A1- 2010 010 156

## Description

### FIELD

The present disclosure relates to a two part polyurethane adhesive composition having a long pot life and a fast curing speed. The present disclosure also relates to a multilayer food packaging material comprising the cured reaction products of two component polyurethane adhesive composition bonding adjacent layers of material.

### BRIEF DESCRIPTION OF RELATED TECHNOLOGY

Food packaging has evolved from glass jars and metal cans to flexible pouches used to completely surround and enclose everyting from soup to drinks to tuna fish to nuts. These flexible pouches comprise overlying sheets of multilayer laminated material that are sealed around a periphery to enclose a food product between the overlying sheets and within the sealed periphery. One well known commercial example of a flexible food pouch is the CAPRISUN juice pouch. The flexible food pouch can be formed from a single, folded sheet or two overlying separate sheets.

Each sheet of the flexible pouch is a sophisticated multilayer structure comprised of overlying layers of selected materials with each layer bonded to the adjacent layers by an adhesive. The material in each layer is selected for appropriate properties, for example barrier properties such as resistance to oxygen or water; physical properties such as tensile strength; or the thermoplastic ability to melt and fuse to a contacting layer by heat sealing. The overall cross-sectional thickness the pouch sheet or wall which surrounds the food is, for example and without limitation, about 2 mils (0.002 inch) (0.05 mm) to about 20 mils (0.020 inch) (0.5 mm).

The food package multilayer material typically has at least a thermally fusable sealing layer comprising a thermoplastic polymer such as polypropylene, on a first outer surface, and an abuse-resistant layer on an opposing outer surface. The abuse resistant layer can be a polyester layer or a polyethylene terephthalate (PET) layer, though other materials, including other polyesters which provide suitable properties can be used. A barrier defined by one or more layers of e.g. metal foil, aluminum oxide (AlOx), silicon oxide (SiOx), polyvinylidene chloride, ethylene vinyl alcohol copolymer, may optionally be positioned between the sealing layer and the outer polyester layer. Each layer is bonded to adjacent layers by an adhesive, typically a curable, two component polyurethane adhesive composition.

Two component polyurethane adhesive compositions generally comprise components that are liquids or pastes at room temperature before they are mixed together. One component of the composition comprises a polyol. The other component comprises monomeric, polymeric or prepolymer isocyanate. Either or both of the components can comprise other ingredients such as chain extenders or catalysts. The two adhesive components are stored separately and fully mixed together just prior to use. Upon mixing the components begin a curing reaction between the free isocyanate groups and the active hydrogens from the polyol. If there are excess free isocyanate groups after the main curing reaction, the excess free isocyanate groups are cured by ambient moisture from the atmosphere or surface moisture from the substrates.

After mixing there is an open time or "pot life" before the mixed components partially cure to a viscosity too thick for application to a substrate. One definition of pot life is the time it takes for a mixed adhesive composition to double its as mixed viscosity. After application to a substrate the mixed composition continues to cure, developing bonding strength while transforming into a solid form. Pot life and cure speed are typically related. A composition having a faster cure speed will react faster and have a shorter pot life. Additives to accelerate the cure speed will also shorten the pot life.

Thus formulation of two part adhesive compositions requires a trade off between a desired rapid cure rate and a desired long pot life. A long pot life is desirable because it allows the mixed adhesive to be applied to substrates for a longer period before the process must be shut down to clean equipment and change adhesive and provides a longer time to wet out the substrates to be bonded. A long pot life allows for the maximum work life period for the adhesive which would in turn simplify design of processing equipment. A rapid cure allows the adhesive to strongly bond substrates quickly, providing a faster process and minimizing processing time and storage of bonded but not fully cured material.

Processes for making flexible food pouches include printing the outer layer with desired graphics and/or other information and subsequently adhesively laminating the layers to make a sheet of flexible package material.

After lamination, the sheet material is cured for a time sufficient to allow the adhesive to develop desired strength and heat resistance. Full curing also cross links adhesive components within the sheet material to lessen the possibility of adhesive component migration into subsequently enclosed food products. This curing time can be, for example, one to ten days or more.

In some uses the food packaging is subjected to "retort packaging" or "retort processing". This refers to a heat treatment process which is used to bring the food within the sealed food pouch to a "commercially sterile" condition. In such process, the sealed food package enclosing food is subjected to hot water and steam under a pressurized atmosphere such that the water is in the liquid state at temperatures above the atmospheric boiling temperature of water. Typical retort processing temperatures are from about 240 degrees F to about 275 degrees F.

"Commercially sterile" means that the packaged product has been held at a specified minimum temperature for a specified minimum time, sufficient to kill substantially all pathologically destructive organisms. The specified temperatures and times vary according to the product contents of the package, as is known to those skilled in the art.

The actual period of time a package needs to be exposed to such heat treatment process to reach a commercially sterile condition depends on a number of factors such as the processing temperature, the layout and function of the processing equipment, package size and configuration, and nature of the product contained in the package. While a processing time as short as 5 minutes to 10 minutes, can be adequate in some instances retort processing time is typically about 30 minutes to about 60 minutes.

The retorted food package should be generally physically stable under retort conditions such that the appearance of the package is acceptable to the typical consumer after retort processing. Namely, the package is not deleteriously distorted, wrinkled, puckered, or otherwise damaged, and provides a commercially-acceptable appearance to the user. An accepted definition of retort processing is set forth in 21 CFR 176.170 "Components of Paper and Paperboard in Contact with Aqueous and Fatty Foods", at Table 2, Condition of Use "A", "High Temperature Heat Sterilized Over 212 degrees F".

As with any material in contact with food there is concern about, and regulation of, materials that might pass or migrate from the packaging to the food contained in the packaging. This concern is heightened for food packages that have been retort processed because of the package exposure to increased pressures and temperatures. The United States Food and Drug Administration has recommended test methods *(Guidance for Industry: Preparation of Premarket Submissions for Food Contact Substances: Chemistry Recommendations;* available on the FDA website) to measure the amount of materials that might migrate from food packaging to food. These and other test methods well known to those in the art. Food packaging sheet materials that migrate high levels of chemical components to the food product are not generally desirable or acceptable for food packaging use.

United States Patent No. 7,834,123 discloses the use of 8-hydroxyquinoline blocking agents to provide an induction period between the mixing of a two part polyurethane adhesive composition and the initiation of curing in that composition (e.g. delay cure). The disclosed blocking agents have the structure 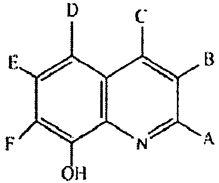 wherein A, B, C, D, E and F are independently selected from the groups consisting of hydrogen, alkyl and halogen. The blocking agents disclosed in this patent have been found to migrate at undesirable levels when used as part of an adhesive component in a flexible laminated material and would not be suitable for use in food packaging.

It would be desirable to provide a two component polyurethane adhesive composition that can provide a long open time or pot life after mixing of the components and as well as a rapid cure.

### SUMMARY

One embodiment provides a two component polyurethane adhesive composition for use in laminating food package materials. The adhesive composition has one or more polyols as a first component and one or more isocyanates as a second component. The composition also comprises one or more catalysts and one or more blocking agents to initially delay the curing reaction. In one variation the blocking agent is a hydroxyalkyl 8-hydroxyquinoline derivative. Despite the initial delay in curing the adhesive composition has an overall cure time similar to adhesive compositions that do not use the blocking agent. The composition provides long open time, improved wet out of the substrates to be bonded, a rapid cure rate and excellent final bond performance at room and elevated temperatures.

One embodiment provides a flexible food package comprising overlying layers of sheet material bonded together by the cured reaction product of a two component polyurethane adhesive composition prepared from one or more polyols as a first component; one or more isocyanates as a second component; a catalyst and a blocking agent. In one variation the blocking agent is a hydroxyalkyl 8-hydroxyquinoline derivative.

One embodiment provides a retortable food package comprising overlying layers of sheet material bonded together by the cured reaction product of a two component polyurethane adhesive composition prepared from one or more polyols as a first component; one or more isocyanates as a second component; a catalyst and a blocking agent. In one variation the blocking agent is a hydroxyalkyl 8-hydroxyquinoline derivative.

The disclosed compounds include any and all isomers and stereoisomers. In general, unless otherwise explicitly stated the disclosed materials and processes may be alternately formulated to comprise, consist of, or consist essentially of, any appropriate components, moieties or steps herein disclosed. The disclosed materials and processes may additionally, or alternatively, be formulated so as to be devoid, or substantially free, of any components, materials, ingredients, adjuvants, moieties, species and steps used in the prior art compositions or that are otherwise not necessary to the achievement of the function and/or objective of the present disclosure.

When the word "about" is used herein it is meant that the amount or condition it modifies can vary some beyond the stated amount so long as the function and/or objective of the disclosure are realized. The skilled artisan understands that there is seldom time to fully explore the extent of any area and expects that the disclosed result might extend, at least somewhat, beyond one or more of the disclosed limits. Later, having the benefit of this disclosure and understanding the concept and embodiments disclosed herein, a person of ordinary skill can, without inventive effort, explore beyond the disclosed limits and, when embodiments are found to be without any unexpected characteristics, those embodiments are within the meaning of the term about as used herein.

### BRIEF DESCRIPTION OF THE DRAWINGS

Figure 1 illustrates the extended pot life for the compositions of Example 1.
Figure 2 illustrates the cure rate for the compositions of Example 1.

### DETAILED DESCRIPTION

The disclosed two component polyurethane adhesive composition comprises one or more polyols as the first component and one or more isocyanates as the second component. One or more blocking agents are used in conjunction with one or more catalysts to provide an initial curing delay or induction period after mixing the components. Despite the initial curing delay the compositions have a time to the fully cured condition similar to products that do not include a blocking agent.

The two component adhesives contain a polyol component and an isocyanate component. To obtain a fully cured network, the equivalent ratio of isocyanate to polyol is about 1:1, for example about 0.9 to 1.25, or advantageously about 1 to 1.2, and preferably about 1.05 to 1.15. A slight excess of isocyanate ensures complete reaction of the polyol. The excess isocyanate will ordinarily become part of the final network through reaction with atmospheric or substrate moisture.

For effective and efficient mixing of the adhesive it is desirable that they have similar viscosities and that the volumes of the two components to be mixed are roughly equal. Since the densities of the two parts are normally similar, equal volumes corresponds to about equal weights of the two parts.

The polyol component of the adhesive composition may comprise one or more various polyols. Preferably the polyols have hydroxyl functionality of at least two and molecular weights in the range of about 500 to about 5000 and include polyester polyols, polyether polyols, polyolefin polyols, polycarbonate polyols and mixtures thereof. The polyols that may be utilized include polyhydroxy ethers (substituted or unsubstituted polyalkylene ether glycols or polyhydroxy polyalkylene ethers), polyhydroxy polyesters, the ethylene or propylene oxide adducts of polyols and the monosubstituted esters of glycerol, polybutadiene diol, polyisobutylene diol, polycarbonates as well as mixtures thereof. "Polymer polyols" are also suitable, i.e., graft polyols containing a proportion of a vinyl monomer, polymerized in situ, such as Niax 34-28, commercially available from Dow Chemical Company. Additional polyols include polycaprolactone diols and polycarbonate diols. The polyol is typically used in an amount of between 25 weight percent to about 75 weight percent of the entire adhesive composition.

Examples of polyether polyols include linear and/or branched polyethers having hydroxyl groups, and contain substantially no functional group other than the hydroxyl groups. Examples of the polyether polyol may include polyoxyalkylene polyol such as polyethylene glycol, polypropylene glycol, polybutylene glycol and the like. Further, a homopolymer and a copolymer of the polyoxyalkylene polyols may also be employed. Particularly preferable copolymers of the polyoxyalkylene polyols may include an adduct of at least one compound selected from the group consisting of ethylene glycol, propylene glycol, diethylene glycol, dipropylene glycol, triethylene glycol, 2-ethylhexanediol-1,3,glycerin, 1,2,6-hexane triol, trimethylol propane, trimethylol ethane, tris(hydroxyphenyl)propane, triethanolamine, triisopropanolamine, ethylenediamine and ethanolamine; with at least one compound selected from the group consisting of ethylene oxide, propylene oxide and butylene oxide.

Examples of polyester polyols include unsaturated polyester polyols having at least one ethylenically unsaturated group per molecule and predominantly hydroxyl end groups and preferably an acid number less than five. The polyester polyol may be prepared from an oligomer of an alpha, beta-ethylenically unsaturated dicarboxylic acid compound obtained by the condensation reaction of one or more of a saturated di- or polycarboxylic acid or anhydride with an excess of glycols or polyhydric alcohols. The unsaturated polyester polyol can also be prepared from unsaturated di- or polycarboxylic acid(s) or anhydride(s) with an excess of glycols and/or polyhydric alcohol(s). The polyols used in this invention preferably have an acid number less than five, and most preferably less than about two.

Examples of suitable saturated di- or polycarboxylic acids include isophthalic, orthophthalic, terephthalic, adipic, succinic, sebacic acid and mixtures thereof, with adipic acid being preferred. Typical unsaturated carboxylic acids or anhydrides include maleic acid, fumaric acid, citaconic acid, chloromaleic acid, allyl succinic acid, itaconic acid, mesaconic acid, their anhydrides and mixtures thereof, with maleic anhydride being the preferred choice. Examples of glycols and polyhydric alcohols which are useful in the invention include neopentyl glycol, ethylene glycol, diethylene glycol, triethylene glycol, propylene glycol, dipropylene glycol, 1,4-butanediol, polyethylene glycol, glycerol, mannitol, 1,propanediol, pentaerythritol, 1,6-hexanediol, 1,3-butanediol and mixtures thereof. One useful polyol is the polyester obtained by reacting adipic acid with an excess of neopentyl glycol.

A number of polyols are commercially available. Non-limiting examples include polyethers such as ARCOL PPG 2025 (Bayer), PolyG 20-56 (Arch) and Pluracol P-2010 (BASF), polyesters such as Dynacoll 7360 (Degussa), Fomrez 66-32 (Crompton), Rucoflex S-105-30 (Bayer) and Stepanpol PD-56 (Stepan), and polybutadiene such as PolyBD R-45HTLO (Sartomer). Other useful polyols are the Desmophen polyols available from Bayer.

The isocyanate component of the adhesive composition comprises one or more of various suitable polymeric, monomeric or prepolymeric isocyanates. Suitable diisocyanates include ethylene diisocyanate; 1,4-tetramethylene diisocyanate; 1,4 and/or 1,6-hexamethylene diisocyanate; 1,12-dodecane diisocyanate; cyclobutane-1,3-diisocyanate; cyclohexane-1,3- and 1,4-diisocyanate and mixtures of these isomers; 1-isocyanato-3,3,5-trimethyl-5-isocyanatomethyl cyclohexane; 2,4- and 2,6-hexahydrotolylene diisocyanate and mixtures of these isomers; hexahydro-1,3- and/or 1,4-phenylene diisocyanate; perhydro-2,4'- and/or 4,4'-diphenyl methane diisocyanate; 1,3- and 1,4-phenylene diisocyanate; 2,4- and 2,6-toluene diisocyanate and mixtures of these isomers; diphenyl methane-2,4'- and/or 4,4'-diisocyanate; naphthylene-1,5-diisocyanate; 1,3- and 1,4-xylylene diisocyanate, 4,4'-methylene-bis(cyclohexyl isocyanate), 4,4'-isopropyl-bis(cyclohexyl isocyanate), 1,4-cyclohexyl diisocyanate and 3-isocyanatomethyl-3,5,5-trimethylcyclohexyl isocyanate (IPDI); 2,4- and 2,6-toluene diisocyanate; diphenylmethane diisocyanate; hexamethylene diisocyanate; dicyclohexylmethane diisocyanate; isophorone diisocyanate; 1-methyoxy-2,4-phenylene diisocyanate; 1-chlorophenyl-2,4-diisocyanate; p-(1-isocyanatoethyl)-phenyl isocyanate; m-(3-isocyanatobutyl)-phenyl isocyanate and 4-(2-isocyanate-cyclohexyl-methyl)-phenyl isocyanate, isophorone diisocyanate, toluene diisocyanate and mixtures thereof.

It is also possible to use aliphatic or aromatic diisocyanates of the type which are obtained by reacting excess diisocyanate with polyfunctional compounds containing hydroxyl or amine groups and which, in practical polyurethane chemistry, are referred to either as "modified isocyanates" or as "isocyanate prepolymers". Such materials are available commercially, for example from Bayer.

The adhesive composition comprises at least one catalyst. Advantageously, the catalyst can be an organometallic catalyst, for example a tin or organotin catalyst. The catalyst may comprise from about 0.001 to about 1 weight percent of the adhesive and preferably comprises in the range of about 0.01 to about 0.1 weight percent of the adhesive. The tin compounds that may comprise part of the present catalyst compositions are conventional catalysts for the reaction of hydroxyl-containing organic molecules with isocyanates to form urethane groups. Representative members of this class of tin compounds include stannous salts of carboxylic acids, organostannonic acids such as butylstannonic acid, organothiostannonic acids, diorganotin oxides such as dibutyltin oxide, diorganotin sulfides, mono- and diorganotin halides such as dimethyltin dichloride, mono- and diorganotin carboxylates such as dibutyltin dilaurate, dibutyltin adipate and dibutyltin maleate, mono- and diorganotin mercaptides such as dibutyltin bis(lauryl mercaptide), mono- and diorganotin derivatives of mercaptocarboxylic acid esters and mercaptoalkanol esters such as dibutyltin-S,S'-bis(isooctyl mercaptoacetate) and dibutyltin S,S'-bis(mercaptoethyl stearate), diorganotin oxides such as dibutyltin oxide and mono- and diorganotin derivatives of β-diketones such as dibutyltin bis-acetylacetonate. One useful organometallic catalyst is dibutyltin dilaurate or DBTDL).

Additional catalysts that can be used include organometallic catalysts, among others. Some examples of suitable organometallic catalysts include organometallic compounds of lead, iron, bismuth, mercury, zirconium, titanate, zinc, cobalt and the like. The use of a delayed action catalyst such as an iron pentanedione or a bismuth carboxylate, as described in U.S. Pat. No. 4,611,044, herein incorporated by reference, is also possible.

The adhesive composition may also contain a tertiary amine catalyst. Examples of tertiary amine catalysts include N,N-dimethylaminoethanol, tris(dimethyl aminopropyl) amine, N,N-dimethylcyclohexylamine, bis-(2-methyl aminoethyl) ether, N,N-dimethylbenzylamine, diaminobicyclooctane, triethylamine, tributylamine, N-methylmorpholine, N-ethyl-morpholine, N-coco-morpholine, N,N,N',N"-tetramethyl-ethylene-diamine, 1,4-diaza-bicyclo-(2,2,2)-octane, N-methyl-N'-dimethyl-amino-ethylpiperazine, N,N-dimethylbenzylamine, bis-(N,N-diethyl-aminoethyl)-adipate, N,N-diethylbenzylamine, pentamethyl-diethylenetriamine, N,N-dimethyl-cyclohexylamine, N,N, N',N'-tetramethyl-1,3-butanediamine, N,N-dimethyl-.beta.-phenylethylamine, 1,2-dimethyl-imidazole, 2-methylimidazole and mixtures thereof. Also useful are the commercially available tertiary amines such as Niax A-1, available from WITCO; Thancat DD, available from Huntsman; and the like. Mannich bases known per se obtained from secondary amines such as dimethylamine and aldehydes, preferably formaldehyde, or ketones such as acetone, methyl ethyl ketone or cyclohexanone and phenols such as phenol nonylphenol or bisphenol and silaamines having carbon-silicon bonds as described, e.g., in German Patent No. 1,229,290 and U.S. Pat. No. 3,620,984, may also be used as catalysts. Examples include 2,2,4-trimethyl-2-silamorpholine and 1,3-diethylamino-ethyltetramethyl-disiloxane. Delayed action catalysts such as NIAX A-300, NIAX A400, NIAX-107, DABCO 8154, DABCO DC-1 and DABCO DC-2 may also be used. A useful tertiary amine catalyst is 1,4-diaza-bicyclo-(2,2,2)-octane, available as DABCO 33-LV from Air Products Company (33% triethylenediamine in dipropylene glycol).

One or more blocking agents are utilized to provide an induction period after mixing the two parts of the adhesive composition. The blocking agent comprises in the range of about 0.001 to about 10 weight percent of the adhesive, advantageously in the range of about 0.01 to about 5 weight percent of the adhesive and more advantageously in the range of about 0.1 to about 1 weight percent of the adhesive.

One advantageous family of blocking agents has the structure 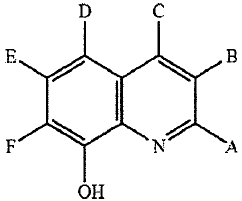 wherein at least one of A, B, C, D, E and F is -(CH₂)ₙOH where n is an integer from 0 to about 10 and the others of A, B, C, D, E and F are each independently selected from hydrogen, -(CH₂)ₙ and -(CH₂)ₙOH where n is an integer from 0 to about 10. In one advantageous variation at least one of A, B, C, D, E and F is-CH₂OH and the others of A, B, C, D, E and F are each hydrogen. In one advantageous variation the blocking agent is 5-hydroxymethyl-8-hydroxy quinoline.

Synthesis of 8-hydroxyquinoline derivatives is known in the art, see for example, Li L. and Xu B.; Synthesis and characterization of 5-substituted 8-hydroxyquinoline derivatives and their metal complexes; Tetrahedron 64 (2008) 10986-10995. Some 8-hydroxyquinoline derivatives are available either as stock chemicals or from custom formulators.

The addition of the hydroxyalkyl-8-hydroxyquinoline derivatives to a two part polyurethane adhesive composition causes a reduction in the composition curing rate immediately after mixing the adhesive components. The reduction in curing rate results in a desirably longer adhesive composition pot life as compared to the same adhesive composition that does not contain a blocking agent. Following the delay, the adhesive composition quickly cures so that the tensile shear strength, storage modulus and total cure time are similar to those produced by the same adhesive without the blocking agent. In sum, the blocking agent desirably increases two part polyurethane adhesive composition pot life without substantially changing overall cure time for that adhesive composition.

8-hydroxyquinoline derivatives without the -(CH₂)ₙOH group will migrate at high levels from a cured polyurethane adhesive composition and therefore are not desirable for use in food packaging. Surprisingly, adding one or more -(CH₂)ₙOH moieties to the 8-hydroxyquinoline structure immobilizes these hydroxyquinoline derivatives in the cured polyurethane adhesive composition and prevents these hydroxyalkyl-8-hydroxyquinoline derivatives from migrating out of the cured composition. Further surprisingly, addition of one or more -(CH₂)ₙOH groups to the 8-hydroxyquinoline structure does not interfere with ability of these hydroxyquinoline derivatives to provide an induction period after mixing the two parts of a polyurethane adhesive composition. The surprising ability of hydroxyalkyl-8-hydroxyquinoline derivatives to delay curing of a two part polyurethane adhesive composition without significant migration from the cured composition makes them especially suited for use in bonding food packaging where migration of chemicals from food packaging is a concern.

Chain extenders may optionally be added to the two part adhesive composition of the present invention. These include low molecular weight diols and polyols, such as ethylene glycol, propylene glycol, 1,4-butanediol, diethylene glycol, hexane diol, trimethylol propane, glycerol, hydroxyl-terminated polyethylene oxide (polyethylene glycol), glycerin and mixtures thereof. Other common chain extenders which may be used include diamines and polyamines that, when blended with the polyol component and reacted with the isocyanate component, will not phase separate from the compositions. Examples of such amine compounds are ethylenediamine, polyoxypropylene diamine, 1,2- and 1,4-diaminocyclohexane in tans-, cis- or their mixture, dimethyldiaminodicyclohexylmethane, and 1,2-propanediamine. Still other chain extenders which may be used include amine containing alcohols or low molecular weight polyols. Examples are monoethanolamine, diethanolamine, triethanolamine, tetra(2-hydroxypropyl) ethylenediamine available as Quadrol polyol (BASF Corporation).

Such chain extenders provide several benefits to the adhesive compositions including reaction with the isocyanate to improve flexibility, impact resistance and reaction rate. Chain extenders comprise in the range of about 0 to about 20 weight percent of the composition, and preferably from about 3 to about 15 weight percent of the composition.

Optionally, fillers, fibers, plasticizers, pigments, colorants, flame retardants, processing aids such as thixotropic agents and internal lubricants, all of which are well known to those skilled in the art, can be added to the two part adhesive composition. Various organic or inorganic fillers or fibers can be added to reduce the exotherm of the reaction of the two components, provide physical reinforcement, and/or reduce its cost. Fillers include such materials as talc, calcium carbonate, silica beads, calcium sulfate, aluminum trihydrate, ammonium polyphosphate, etc. The amounts of filler or other additives will vary depending on the desired application. Naturally, any optional materials should be suited for use in food packaging.

The ingredients of Component A (isocyanate component) are readily combined and mixed using convention processes for polyurethane adhesives. The ingredients of Component B (polyol component) are readily combined and mixed using convention processes for polyurethane adhesives. Components A and B are stored separately and mixed at the time of use to prevent premature curing.

During use Components A and B are thoroughly mixed and the mixture is applied to a substrate to be bonded. In flexible packaging embodiments the adhesive is applied between two or more layers of laminating materials to form a multilayer structure for use as flexible food package sheet material. Application of adhesive and lamination of layers of materials to form a multilayer flexible food package sheet material is well known. The sheet is typically held for a time sufficient to allow the adhesive to fully cure. The disclosed adhesives have a substantially longer pot life than adhesives that do not use a blocking agent, allowing lamination of the sheet material for a much longer time before the equipment must be stopped to clean old, partially cured adhesive. Despite the longer pot life the time to fully cure adhesive in the sheet material is acceptable.

After curing the sheet material is formed into an open food package, typically by heating and fusing contacting thermoplastic surfaces. Food is disposed within the open food pouch and the pouch is sealed. In some embodiments the sealed pouch containing food can be retort processed.

The following examples are included for purposes of illustration so that the disclosure may be more readily understood and are in no way intended to limit the scope of the disclosure unless otherwise specifically indicated.

### EXAMPLES

### Example 1.

A two part polyurethane adhesive composition comprising about 50 wt% Tycel 7998 as component A and 50 wt% LA6094 as component B (both from Henkel Corporation Cary, N.C.) was mixed. Component B included about 1 wt% 8-hydroxy quinoline. The mixed adhesive was allowed to fully cure.

The cured adhesive was extracted with 95% ethanol/5% water and the extract was analyzed for presence of 8-hydroxy quinoline that had migrated from the cured adhesive. Testing showed more than 40,000 parts per billion (ppb) of 8-hydroxyquinoline had migrated from the cured adhesive. This cured adhesive is not suitable for food packaging use.

The above two part polyurethane adhesive composition was prepared, however the 8-hydroxyquinoline was replaced by the same amount of 5-hydroxymethyl-8-hydroxy quinoline. The fully cured adhesive was extracted under the same condition as above and the extract was analyzed for presence of 5-hydroxymethyl-8-hydroxy quinoline that had migrated from the cured adhesive. Testing showed less than 140 parts per billion (ppb) of 5-hydroxymethyl-8-hydroxy quinoline had migrated from the cured adhesive. This cured adhesive is suitable for food packaging use.

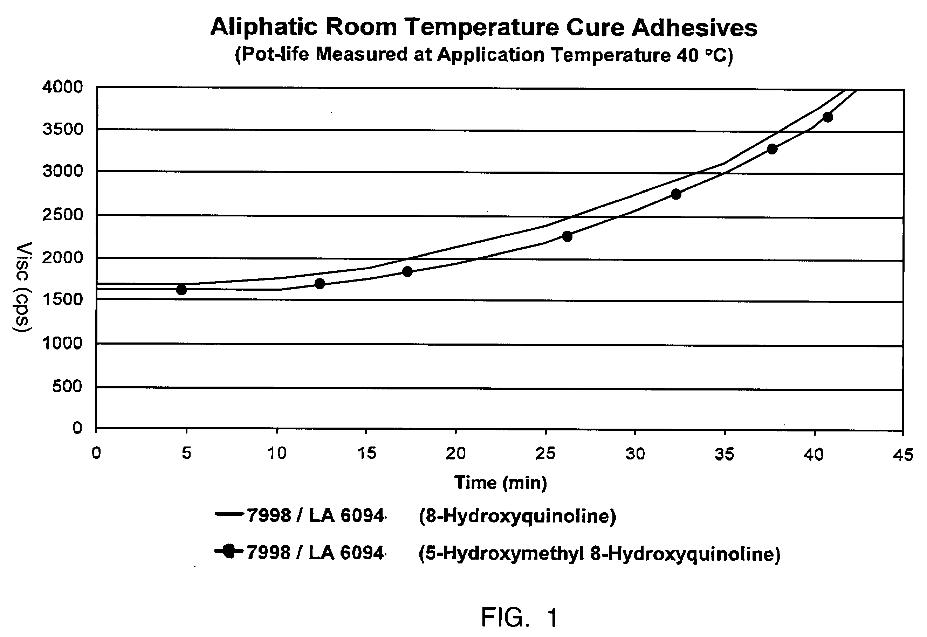

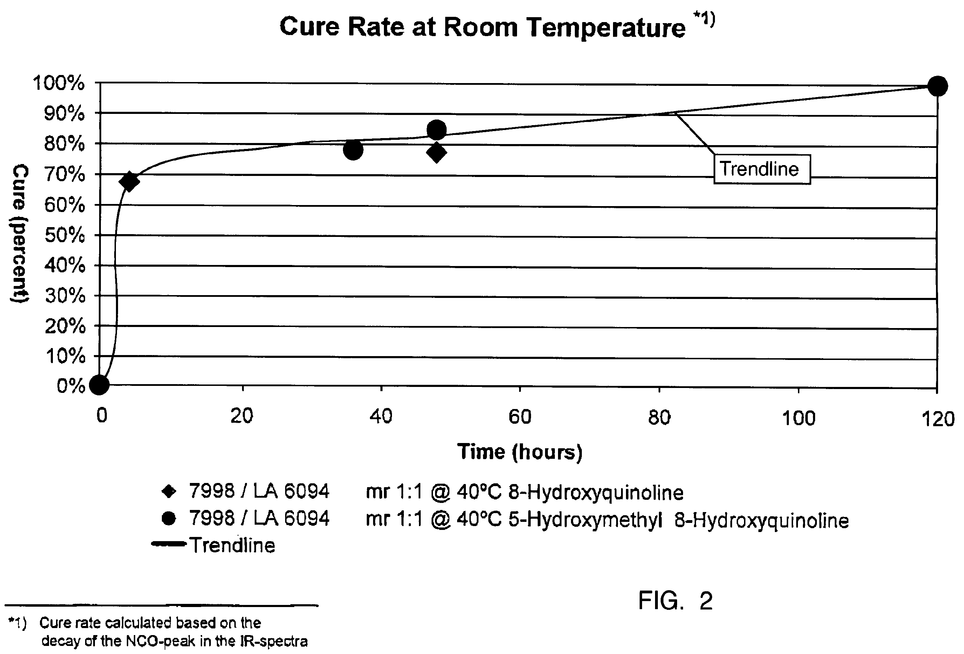

Figure 1 illustrates the extended pot life (about 35 minutes to initial viscosity doubling) for the compositions of Example 1. The 5-hydroxymethyl-8-hydroxy quinoline appears to be slightly more effective at delaying initial cure of the adhesive composition that the 8-hydroxy quinoline. Figure 2 illustrates the cure rate for the compositions of Example 1.

### Example 2.

The following adhesive components were prepared. All percents are by weight of that component.

| Component A | % |
|---|---|
| HDI-Biuret¹ | 100% |

| | |
|---|---|
| 1 Bayer Corp. | |

| Component B | % |
|---|---|
| Polyester polyol based on adipic acid and Neopentyl glycol, | |
| OH number 210 ± 10² | 99.8 |
| catalyst³ | 0.06 |
| catalyst⁴ | 0.14 |

| | |
|---|---|
| 2 Henkel Corp 3 dibutyltin dilaurate 4 DABCO available from Air Products | |

The composition of Example 2 did not include a blocking agent. Component A and Component B were mixed in a 1:1 ratio by weight. The mixed composition had about a 5 minute pot life.

### Example 3.

The composition of Example 2 was prepared, however including 0.6 wt% of 5-hydroxymethyl-8-hydroxyquinoline as a blocking agent in Component B. Component A and Component B were mixed in a 1:1 ratio by weight. The mixed composition had about a 30 minute pot life.

Example 3 illustrates that small amounts of 5-hydroxymethyl-8-hydroxyquinoline are useful to provide a blocking agent that will delay initial cure of a polyurethane adhesive composition

Many modifications and variations of this invention can be made without departing from its sprit and scope, as will be apparent to those skilled in the art. The specific embodiments described herein are offered by way of examples only, and the invention is to be limited only by the terms of the appended claims, along with the full scope and equivalents to which such claims are entitled.

## Claims

1. A two component polyurethane adhesive composition comprising a first component of one or more polyols; a second component of one or more isocyanates; a catalyst and a blocking agent having the structure 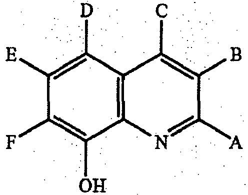 wherein at least one of A, B, C, D, E and F is -(CH₂)ₙOH where n is an integer from 0 to about 10 and the others of A, B, C, D, E and F are each independently selected from hydrogen, (CH₂)ₙ and -(CH₂)ₙOH where n is an integer from 0 to about 10.

2. The adhesive of claim 1, wherein at least one of A, B, C, D, E and F is -CH₂OH and the others of A, B, C, D, E and F are each hydrogen, wherein preferably the blocking agent is 5-hydroxymethyl-8-hydroxy quinoline.

3. The adhesive of claim 1, wherein the blocking agent comprises in the range of about 0.0001 to about 10 weight percent of the adhesive.

4. The adhesive of claim 1, wherein the catalyst is selected from tin catalysts, organotin catalysts, organometallic catalysts, amine catalysts, tertiary amine catalysts and mixtures thereof, wherein preferably the catalyst is dibutyltin dilaurate or comprises a mixture of dibutyltin dilaurate and one or more amine catalysts.

5. The adhesive of claim 1, wherein the catalyst comprises in the range of about 0.001 to about 1 weight percent of the adhesive, preferably in the range of about 0.01 to about 0.3 weight percent of the adhesive.

6. The adhesive of claim 1, wherein the one or more polyols have a hydroxyl functionality of at least two and molecular weights in the range of about 500 to about 5000.

7. The adhesive of claim 1, wherein the one or more polyols are selected from the group consisting of polyether polyols, polyester polyols, polycarbonate polyols, polyolefin polyols and mixtures thereof.

8. The adhesive of claim 1, wherein the one or more polyols comprise in the range of about 25 weight percent to about 75 weight percent of the adhesive.

9. The adhesive of claim 1, wherein the one or more isocyanate is selected from the group of prepolymeric isocyanate, polymeric isocyanate, monomeric isocyanate and mixtures thereof.

10. The adhesive of claim 1, wherein the adhesive further comprises one or more chain extenders selected from low molecular weight diols, diamines and amine containing alcohols, low molecular weight polyols, polyamines and amine containing polyols, ethylene glycol, propylene glycol, 1,4-butanediol, diethylene glycol, dipropylene glycol, hexane diol, trimethylol propane, glycerol, hydroxyl-terminated polyethylene oxide (polyethylene glycol), ethylene diamine, polyoxypropylene diamine, monoethanolamine, diethanolamine, triethanolamine, tetra(2-hydroxypropyl) ethylenediamine, and mixtures thereof, wherein preferably the adhesive comprises one or more chain extenders in the range of about 0 to about 20 weight percent of the adhesive.

11. A food packaging laminate sheet comprising a first laminate sheet portion comprising a thermoplastic layer bonded to a barrier layer by cured reaction products of the adhesive composition of claim 1

12. A food packaging laminate sheet comprising a thermoplastic polymer layer bonded to a barrier layer by the cured reaction products of an adhesive composition, the adhesive composition prepared from a first component comprising of one or more polyols; a second component comprising one or more isocyanates; a catalyst and a blocking agent having the structure 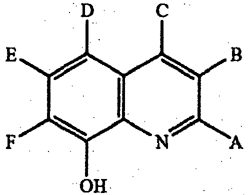 wherein at least one of A, B, C, D, E and F is -(CH₂)ₙOH where n is an integer from 0 to about 10 and the others of A, B, C, D, E and F are each independently selected from hydrogen and-(CH₂)ₙOH where n is an integer from 0 to about 10.

13. A food package comprising:
a first laminate sheet portion comprising a thermoplastic layer bonded to a barrier layer by the cured reaction products of an adhesive composition, the adhesive composition prepared from a first component comprising of one or more polyols; a second component comprising one or more isocyanates; a catalyst and a blocking agent having the structure 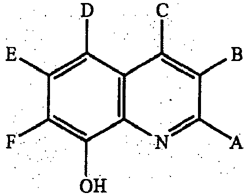 wherein at least one of A, B, C, D, E and F is -(CW₂)ₙOH where n is an integer from 0 to about 10 and the others of A, B, C, D, E and Fare each independently selected from hydrogen and-(CH₂)ₙOH where n is an integer from 0 to about 10;
a second laminate sheet portion comprising a thermoplastic layer bonded to a barrier layer by the cured reaction products of an adhesive composition, the adhesive composition prepared from a first component comprising of one or more polyols; a second component comprising one or more isocyanates; a catalyst and a blocking agent having the structure 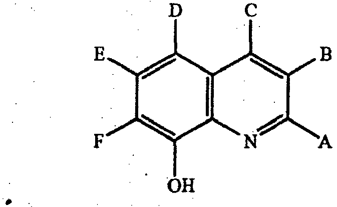 wherein at feast one of A, B, C, D, E and F is -(CH₂)ₙOH where n is an integer from 0 to about 10 and the others of A, B, C, D, E and F are each independently selected from hydrogen and-(CH₂)ₙOH where n is an integer from 0 to about 10; the thermoplastic layers of the first and second portions being thermally fused adjacent the periphery of the food package and a food product sealed between the fused thermoplastic layers.

14. The food package of claim 13 being retort processed.

15. The food package of claim 13 wherein the first and second sheet portions are part of a single folded sheet.

## Patentansprüche

1. Zweikomponenten-Polyurethan-Klebstoffzusammensetzung, umfassend eine erste Komponente aus einem oder mehreren Polyolen; eine zweite Komponente aus einem oder mehreren Isocyanaten; einen Katalysator und ein Blockiermittel mit der folgenden Struktur: 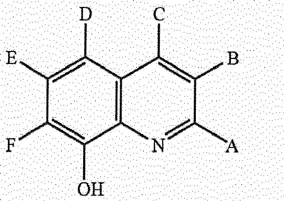 wobei wenigstens eines von A, B, C, D, E und F -(CH₂)ₙOH ist, wobei n eine ganze Zahl von 0 bis etwa 10 ist und die anderen von A, B, C, D, E und F jeweils unabhängig ausgewählt sind aus Wasserstoff, -(CH₂)ₙ und -(CH₂)ₙOH, wobei n eine ganze Zahl von 0 bis etwa 10 ist.

2. Klebstoff nach Anspruch 1, wobei wenigstens eines von A, B, C, D, E und F -CH₂OH ist und die anderen von A, B, C, D, E und F jeweils Wasserstoff sind, wobei das Blockiermittel vorzugsweise 5-Hydroxymethyl-8-hydroxychinolin ist.

3. Klebstoff nach Anspruch 1, wobei das Blockiermittel im Bereich von etwa 0,0001 bis etwa 10 Gew.-% des Klebstoffs umfasst.

4. Klebstoff nach Anspruch 1, wobei der Katalysator ausgewählt ist aus Zinnkatalysatoren, Organozinnkatalysatoren, Organometallkatalysatoren, Aminkatalysatoren, tertiären Aminkatalysatoren und Mischungen daraus, wobei der Katalysator vorzugsweise Dibutylzinndilaurat ist oder eine Mischung aus Dibutylzinndilaurat und einem oder mehreren Aminkatalysatoren umfasst.

5. Klebstoff nach Anspruch 1, wobei der Katalysator im Bereich von etwa 0,001 bis etwa 1 Gew.-% des Klebstoffs umfasst, vorzugsweise im Bereich von etwa 0,01 bis etwa 0,3 Gew.-% des Klebstoffs.

6. Klebstoff nach Anspruch 1, wobei das eine oder die mehreren Polyole eine Hydroxylfunktionalität von wenigstens zwei und Molekulargewichte im Bereich von etwa 500 bis etwa 5000 aufweisen.

7. Klebstoff nach Anspruch 1, wobei das eine oder die mehreren Polyole ausgewählt sind aus der Gruppe bestehend aus Polyetherpolyolen, Polyesterpolyolen, Polycarbonatpolyolen, Polyolefinpolyolen und Mischungen daraus.

8. Klebstoff nach Anspruch 1, wobei das eine oder die mehreren Polyole im Bereich von etwa 25 Gew.-% bis etwa 75 Gew.-% des Klebstoffs umfassen.

9. Klebstoff nach Anspruch 1, wobei das eine oder die mehreren Isocyanate ausgewählt sind aus der Gruppe aus präpolymerem Isocyanat, polymerem Isocyanat, monomerem Isocyanat und Mischungen daraus.

10. Klebstoff nach Anspruch 1, wobei der Klebstoff ferner einen oder mehrere Kettenverlängerer umfasst, ausgewählt aus niedermolekularen Diolen, Diaminen und aminhaltigen Alkoholen, niedermolekularen Polyolen, Polyaminen und aminhaltigen Polyolen, Ethylenglykol, Propylenglykol, 1,4-Butandiol, Diethylenglykol, Dipropylenglykol, Hexandiol, Trimethylolpropan, Glycerin, hydroxylterminiertem Polyethylenoxid (Polyethylenglykol), Ethylendiamin, Polyoxypropylendiamin, Monoethanolamin, Diethanolamin, Triethanolamin, Tetra(2-hydroxypropyl)ethylendiamin und Mischungen daraus, wobei der Klebstoff vorzugsweise einen oder mehrere Kettenverlängerer im Bereich von etwa 0 bis etwa 20 Gew.-% des Klebstoffs umfasst.

11. Laminatfolie zum Verpacken von Lebensmitteln, umfassend einen ersten Laminatfolienabschnitt, umfassend eine thermoplastische Schicht, die durch ausgehärtete Reaktionsprodukte der Klebstoffzusammensetzung nach Anspruch 1 an eine Barriereschicht gebunden ist.

12. Laminatfolie zum Verpacken von Lebensmitteln, umfassend eine thermoplastische Polymerschicht, die durch die ausgehärteten Reaktionsprodukte einer Klebstoffzusammensetzung an eine Barriereschicht gebunden ist, wobei die Klebstoffzusammensetzung hergestellt ist aus: einer ersten Komponente, umfassend ein oder mehrere Polyole; einer zweiten Komponente, umfassend ein oder mehrere Isocyanate; einem Katalysator und einem Blockiermittel mit der folgenden Struktur: 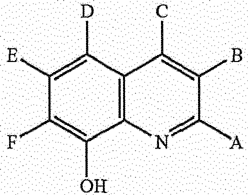 wobei wenigstens eines von A, B, C, D, E und F -(CH₂)ₙOH ist, wobei n eine ganze Zahl von 0 bis etwa 10 ist und die anderen von A, B, C, D, E und F jeweils unabhängig ausgewählt sind aus Wasserstoff und -(CH₂)ₙOH, wobei n eine ganze Zahl von 0 bis etwa 10 ist.

13. Lebensmittelverpackung, umfassend:
einen ersten Laminatfolienabschnitt, umfassend eine thermoplastische Schicht, die durch die ausgehärteten Reaktionsprodukte einer Klebstoffzusammensetzung an eine Barriereschicht gebunden ist, wobei die Klebstoffzusammensetzung hergestellt ist aus einer ersten Komponente, umfassend ein oder mehrere Polyole; einer zweiten Komponente, umfassend ein oder mehrere Isocyanate; einem Katalysator und einem Blockiermittel mit der folgenden Struktur: 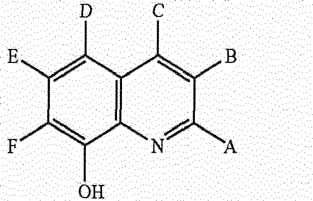 wobei wenigstens eines von A, B, C, D, E und F -(CH₂)ₙOH ist, wobei n eine ganze Zahl von 0 bis etwa 10 ist und die anderen von A, B, C, D, E und F jeweils unabhängig ausgewählt sind aus Wasserstoff und -(CH₂)ₙOH, wobei n eine ganze Zahl von 0 bis etwa 10 ist;
einen zweiten Laminatfolienabschnitt, umfassend eine thermoplastische Schicht, die durch die ausgehärteten Reaktionsprodukte einer Klebstoffzusammensetzung an eine Barriereschicht gebunden ist, wobei die Klebstoffzusammensetzung hergestellt ist aus einer ersten Komponente, umfassend ein oder mehrere Polyole; einer zweiten Komponente, umfassend ein oder mehrere Isocyanate; einem Katalysator und einem Blockiermittel mit der folgenden Struktur: 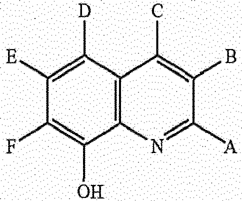 wobei wenigstens eines von A, B, C, D, E und F -(CH₂)ₙOH ist, wobei n eine ganze Zahl von 0 bis etwa 10 ist und die anderen von A, B, C, D, E und F jeweils unabhängig ausgewählt sind aus Wasserstoff und -(CH₂)ₙOH, wobei n eine ganze Zahl von 0 bis etwa 10 ist; wobei die thermoplastischen Schichten des ersten und des zweiten Abschnitts angrenzend an den Randbereich der Lebensmittelverpackung thermisch verschmolzen sind und ein Lebensmittel zwischen den verschmolzenen thermoplastischen Schichten versiegelt ist.

14. Lebensmittelverpackung nach Anspruch 13, die steril verarbeitet ist.

15. Lebensmittelverpackung nach Anspruch 13, wobei der erste und der zweite Folienabschnitt Teil einer einzigen, gefalteten Folie sind.

## Revendications

1. Composition adhésive polyuréthane à deux composants comprenant un premier composant constitué d'un ou de plusieurs polyols ; un second composant constitué d'un ou de plusieurs isocyanates ; un catalyseur et un agent bloquant ayant la structure 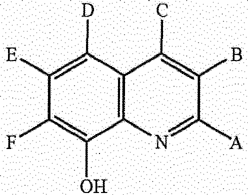 dans laquelle au moins un des groupes A, B, C, D, E et F est -(CH₂)ₙOH où n est un nombre entier de 0 à 10 et les autres parmi A, B, C, D, E et F sont choisi chacun indépendamment parmi l'hydrogène, -(CH₂)ₙ et -(CH₂)ₙOH où n est un nombre entier de 0 à environ 10.

2. Adhésif selon la revendication 1, dans lequel au moins un des groupes A, B, C, D, E et F est -CH₂OH et les autres de A, B, C, D, E et F représentent chacun l'hydrogène, de préférence l'agent bloquant étant la 5-hydroxyméthyl-8-hydroxy-quinoléine.

3. Adhésif selon la revendication 1, dans lequel l'agent bloquant est dans la gamme d'environ 0,0001 à environ 10 pourcent en poids de l'adhésif.

4. Adhésif selon la revendication 1, dans lequel le catalyseur est choisi parmi les catalyseurs à base d'étain, les catalyseurs organostanniques, les catalyseurs organométalliques, les catalyseurs à base d'amine, les catalyseurs à base d'amines tertiaires et leurs mélanges, de préférence le catalyseur est le dilaurate de dibutylétain ou comprend un mélange de dilaurate de dibutylétain et un ou plusieurs catalyseurs à base d'amine.

5. Adhésif selon la revendication 1, dans lequel le catalyseur est dans la gamme d'environ 0,001 à environ 1 pourcent en poids de l'adhésif, de préférence dans la gamme d'environ 0,01 à environ 0,3 pourcent en poids de adhésif.

6. Adhésif selon la revendication 1, dans lequel les un ou plusieurs polyols ont une fonctionnalité hydroxyle d'au moins deux et un poids moléculaire dans la gamme d'environ 500 à environ 5000.

7. Adhésif selon la revendication 1, dans lequel les un ou plusieurs polyols sont choisis dans le groupe constitué par les polyéther-polyols, les polyester-polyols, les polycarbonate-polyols, les polyols polyoléfiniques et leurs mélanges.

8. Adhésif selon la revendication 1, dans lequel les un ou plusieurs polyols sont dans la gamme d'environ 25 pourcent en poids à environ 75 pourcent en poids de l'adhésif.

9. Adhésif selon la revendication 1, dans lequel les un ou plusieurs isocyanates sont choisi dans le groupe constitué par l'isocyanate prépolymère, l'isocyanate polymère, l'isocyanate monomère et leurs mélanges.

10. Adhésif selon la revendication 1, dans lequel l'adhésif comprend en outre un ou plusieurs agents d'allongement de chaîne sélectionnés parmi les diols de bas poids moléculaire, les diamines et les alcools contenant des amines, les polyols de faible poids moléculaire, les polyamines et les polyols contenant des amines, l'éthylèneglycol, le propylèneglycol, le 1,4-butanediol, le diéthylène-glycol, le dipropylène-glycol, l'hexanediol, le triméthylolpropane, le glycérol, l'oxyde de polyéthylène à terminaison hydroxyle (polyéthylène-glycol), l'éthylène-diamine, la polyoxypropylène-diamine, la monoéthanolamine, la diéthanolamine, la triéthanolamine, le tétra-(2-hydroxypropyl)éthylènediamine, et leurs mélanges, de préférence l'adhésif comprenant un ou plusieurs agents d'allongement de chaîne dans la gamme d'environ 0 à environ 20 pourcent en poids de l'adhésif.

11. Feuille de stratifié d'emballage alimentaire comprenant une première partie de feuille stratifiée pourvue d'une couche thermoplastique liée à une couche barrière par des produits de réaction durcis de la composition adhésive selon la revendication 1.

12. Feuille stratifiée d'emballage alimentaire comprenant une couche de polymère thermoplastique liée à une couche barrière par les produits de réaction durcis d'une composition adhésive, la composition adhésive étant préparée à partir d'un premier composant constitué d'un ou de plusieurs polyols ; d'un second composant constitué d'un ou de plusieurs isocyanates ; d'un catalyseur et d'un agent bloquant ayant la structure 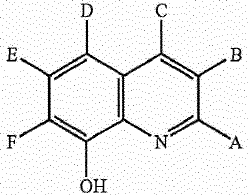 dans laquelle au moins un des groupes A, B, C, D. E et F représente un groupe -(CH₂)ₙOH où n est un nombre entier de 0 à 10 et les autres parmi A, B, C, D, E et F sont choisis chacun indépendamment parmi l'hydrogène et -(CH₂)ₙOH où n est un nombre entier de 0 à environ 10.

13. Emballage alimentaire comprenant :
une première partie de feuille stratifiée pourvue d'une couche thermoplastique liée à une couche barrière par les produits de réaction durcis d'une composition adhésive, la composition adhésive étant préparée à partir d'un premier composant constitué d'un ou de plusieurs polyols ; d'un second composant constitué d'un ou de plusieurs isocyanates ; d'un catalyseur et d'un agent bloquant ayant la structure 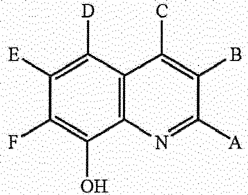 dans laquelle au moins un des groupes A, B, C, D, E et F est -(CH₂)ₙOH où n est un nombre entier de 0 à environ 10 et les autres parmi A, B, C, D, E et F sont choisis chacun indépendamment parmi l'hydrogène et -(CH₂)ₙOH où n est un nombre entier de 0 à environ 10 ;
une seconde partie de feuille stratifiée pourvue d'une couche thermoplastique liée à une couche barrière par les produits de réaction durcis d'une composition adhésive, la composition adhésive étant préparée à partir d'un premier composant constitué d'un ou de plusieurs polyols ; d'un second composant constitué d'une ou de plusieurs isocyanates ; d'un catalyseur et d'un agent bloquant ayant la structure 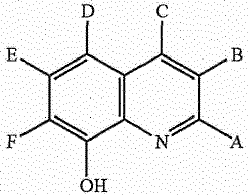 dans laquelle au moins un des groupes A, B, C, D, E et F est -(CH₂)ₙOH où n est un nombre entier de 0 à 10 et les autres parmi A, B, C, D, E et F sont choisis chacun indépendamment parmi l'hydrogène et -(CH₂)ₙOH où n est un nombre entier de 0 à environ 10 ; les couches thermoplastiques des première et seconde parties étant thermiquement fusionnées au voisinage de la périphérie de l'emballage alimentaire et un produit alimentaire scellé entre les couches thermoplastiques fondues.

14. Emballage alimentaire selon la revendication 13 traité en cornues.

15. Emballage alimentaire selon la revendication 13, dans lequel les première et seconde parties de feuille font partie d'une seule feuille pliée.
